# EUROPEAN PATENT APPLICATION

(11) **EP 1 394 511 A1**
(43) Date of publication of application: **03.03.2004**
(21) Application number: 02019423.9
(22) Date of filing: 30.08.2002
(51) Int. Cl.: G01C 21/36

(54) **Positioning apparatus**

(71) Applicant: Sony Ericsson Mobile Communications AB, 221 88 Lund (SE)
(72) Inventor: Pensjö, Tomas, 17760 Järfälla (SE)
(74) Representative: Petri, Stellan

(57) **Abstract**

An electronic apparatus (100) comprises a display (103) and memory means (104) for storing map information. The electronic apparatus is adapted to determine the current position of the electronic apparatus, determine a speed vector (402) corresponding to the direction and speed of a movement of the electronic apparatus, and display position information based on the determined current position of the electronic apparatus on a map on the display, wherein the current position of the electronic apparatus is indicated (401) on the map. The electronic apparatus is further adapted to displace the position indication of the electronic apparatus on the display in a direction opposite to the speed vector by an amount corresponding to the speed vector.

## Description

### Technical Field

Generally, the present invention relates to an apparatus and method for improving the readability of an electronic map that is presented on a display. More specifically, the present invention relates to an apparatus and method for determining the speed and direction of movement of the apparatus and displacing a position indicator, related to the position of the electronic apparatus on the display, in a direction opposite to the direction of movement.

### Background Art

Since the United States Air Force Space Command in 1993 declared the Global Positioning System (GPS) as initial operational, i.e. when 24 well-spaced satellites were operating in their assigned orbits, GPS receivers which makes it possible for people with ground receivers to pinpoint their geographical position have become a useful tool for scientists, hikers, sailors, motorists, etc. At start, the accuracy of the GPS system was restricted to 100 meters in horizontal direction and 156 meters in vertical direction. Today the accuracy of the standard GPS has increased and is down to 1 meter using special equipment, making the GPS even more useful. As the price of GPS receivers has decreased during the 1990s, almost anyone can make use of accurate position information.

Generally, the GPS system is built up from 21 GPS satellites and three spare satellites that orbits the earth at an altitude of 20200km. The satellites are arranged so that four satellites will always be above the horizon.

Besides being equipped with the necessary radio circuitry, all satellites also comprises an atomic clock for exact time measurement. Each satellite is programmed with information concerning its own orbit, wherein it is possible for each satellite to broadcast its current position.

A receiver on the ground may then determine its own position by triangulation, i.e. the receiver determines the bearings to three of the four visible satellites, wherein it is possible to calculate the current geographic position. In case position information from the forth satellite is received, the receiver may in addition to its geographic position also determine its altitude. The position information is normally presented on a display as a longitude and latitude reading. The receiver may however comprise a high resolution display, wherein the current position may be shown on a map on the display. In addition to presenting the current position, as described below, some GPS receivers are also capable of calculating the current speed and direction of movement of the receiver itself.

Besides using the GPS system, it is possible to determine the geographical position by means of a mobile telephone. A system for locating the position of a mobile station in a mobile radio system is disclosed in e.g. US 6,061,565. According to this document, the distance from two base transceivers to the mobile station are measured, wherein it is possible to triangulate the position. Other possible methods of determining the current position and velocity of a mobile station are found in e.g. US 6,324,406 or US 5,629,710.

As mentioned above, it is possible to present the position information on a map on the display. This is advantageous in many aspects, mainly as the user of the positioning apparatus may observe the map on the display and obtain information about the area surrounding the apparatus.

EP 1134553 A2 discloses a positioning apparatus, wherein the current position of the user is found on a map on a screen. In order to increase the readability of the display, the positioning apparatus measures the current speed and presents only map information on the display that is related to the vicinity of a planned route by which the user travels. The same basic idea to reduce the amount of displayed information also is found in e.g. US 6,321,158.

US 5,938,709 discloses a field mapping system, wherein the user of a positioning apparatus obtains map information on a display about the area surrounding the vehicle in which he or she travels. The display is updated with new information as the indicator showing the current position approaches the edge of the map on the display.

The de facto standard today to display position information on a map is to either show a static map on the display and move an indicator representing the user position over the map as the user moves, or to place the indicator in the center of the display and move the map in a direction opposite to the direction of movement of the user.

The former technique makes it easy for the user to find his way since the map is still (similarly to an ordinary paper map) as long as the user is on a location corresponding to center part of the display. When the indicator approaches the edge of the display, the display must be updated (either manually or automatically) in order to cover as much as possible of the surrounding area.

The latter technique always provides as much information as possible to the user regarding the surrounding area. However, one drawback is that the user might be somewhat difficult to track the movements on the screen as the indicator is still and the map moves (and normally also rotates as the user turns). Another drawback with the latter technique is that much of the information that is presented is of lower interest to the user, i.e. if the user is travelling in one direction, map information covering an area which he has recently passed is normally of lower interest.

Irrespective of which technique to display information that is used, one major problem with electric apparatus showing position information on a map on a display is that the display needs to be quite big in order to cover the vicinity of the apparatus with an acceptable resolution. If the display is small or with lower resolution, such as the display on a personal digital assistant (PDA), the map will only be able to cover a very small area surrounding the apparatus if the user shall be able to read and comprehend the information. Consequently, the techniques used today are not well suited for displaying information on a small (or low-resolution) display.

### Summary of the Invention

An object with the present invention is to increase the readability of a map on a display. More specifically is it an object of the present invention to increase the readability of a map on a small display when the user is in motion, e.g. when travelling by car, boat etc.

The object of the invention is achieved by first determining the current position, speed and direction of movement of the electric apparatus by means of a positioning unit, e.g. a GPS receiver and thereafter calculate a speed vector that corresponds to the speed and direction of movement of the electric apparatus. If desired, the speed vector may be used to move the map on the display according to the prior art technique described above for linearly updating the map as the user moves.

Whether or not the speed vector is used for linearly moving the map, the speed vector is used for displacing the position indication of the electronic apparatus on the display in a direction opposite to the speed vector by an amount corresponding to the speed vector. By doing so, the user of the apparatus will always have an maximum amount of map visible on the display in the direction in which he or she is heading.

Other objects, features and advantages of the present invention appear from the following detailed disclosure, from the appended claims as well as from the accompanying drawings.

### Brief Description of the Drawings

A preferred embodiment of the present invention will now be described in more detail, reference being made to the accompanying drawings, in which:
FIG 1 is a schematic illustration of an electric apparatus according to a preferred embodiment, and
FIG 2 is a schematic flow diagram illustrating a method of drawing a map on a display according to a preferred embodiment of the present invention.
FIG 3 is a schematic flow diagram illustrating a method of drawing a map on a display according to an alternative embodiment of the present invention.
FIGs 4a-e illustrates the result of drawing a map on a display according to the present invention.

### Detailed Disclosure of a Preferred Embodiment

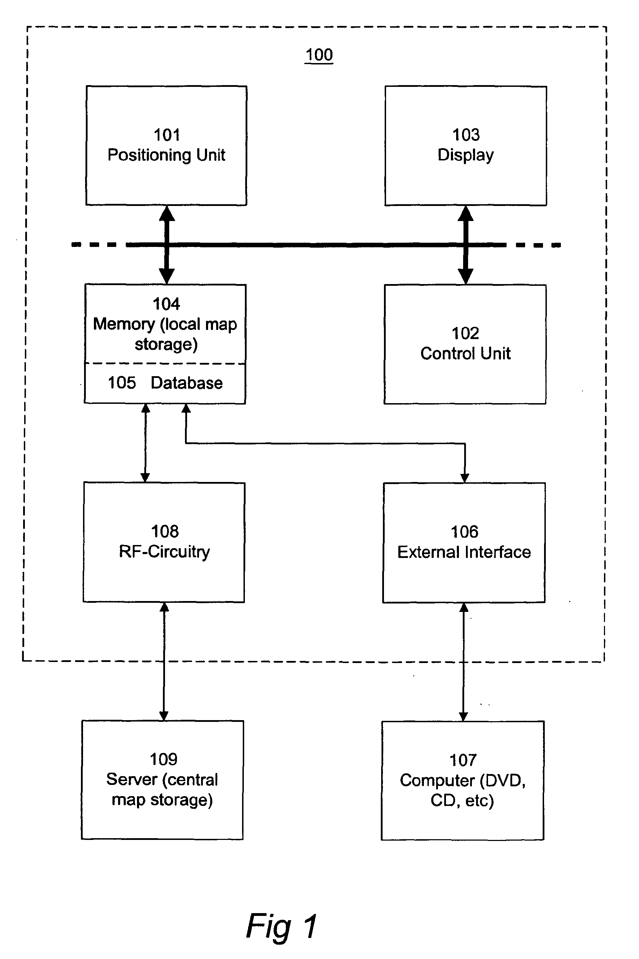

A preferred embodiment of the present invention will now be described with reference to FIG 1.

An electronic apparatus 100 is equipped with a positioning unit 101 for receiving position information, wherein the actual position of the electronic apparatus 100 may be determined. The positioning unit 101 is preferably in form of a GPS receiver or a radio location receiver using GSM/UMTS technology as described in the prior art section.

Besides determining the position of the electric apparatus 100, the positioning unit 101 may also determine the velocity of the electronic apparatus 100. In case of GPS, the accuracy is normally limited by a number of factors, e.g. delays in the signals caused by atmospheric disturbances and delays caused by reflections from nearby buildings and the ground.

In order to determine the velocity of the electric apparatus 100, the positioning unit 101 may use the Doppler shift in the carrier signals coming from each satellite in the GPS system. The carrier frequency is unaffected by atmospheric disturbances, resulting in a more correct measure of the velocity of the electric apparatus 100.

Alternatively, the positioning unit 101 may determine the velocity of the electric apparatus 100 by determining the current position and comparing it with a previous position. If the control unit 102 compares the two positions after a predetermined period of time, the velocity of the electric apparatus 100 may be determined. This method of calculating velocity is however subject to the errors caused by atmospheric disturbances, which makes the result somewhat unsuitable for accurate determination of the current velocity.

The actual choice of positioning system is however of lower importance to the invention as long as accurate positioning and/or velocity information may be determined.

In a preferred embodiment, the positioning unit 101 provides a control unit 102 with information regarding the current position, velocity and direction of movement of the electronic apparatus. As an alternative, the control unit 102 may perform the necessary calculations in order to determine the velocity based on two or more position samples as described above.

Besides being coupled to the positioning unit 101, the control unit 102 is also coupled to a display 103 and a memory 104 which may be in form of a RAM, EEPROM, Flash PROM or any other suitable form of information storing device. The memory 104 comprises code portions for controlling the behavior of the electric apparatus (i.e. an operating system) as well memory segments reserved for map information, which will be described in more detail below.

By means of the positioning unit 101 and the control unit 102, the electric apparatus 100 always knows were it is and where it is heading. This information is shown on the display 103 in form of an indicator on a map. According to one embodiment of the invention, the map information is stored in a database 105 in the memory 104 and may be retrieved when needed. Before using the electric apparatus 100 for positioning purposes, the user of the electric apparatus 100 may store a set of maps in the memory 104 by e.g. connecting the electric apparatus 100 via an external interface 106 to a computer 107 (e.g. a PC) comprising a CD-player or a DVD-player, wherein a CD/DVD with map information is inserted into the player and the contents of the CD/DVD is transferred to the electric apparatus 100. The user may thereafter disconnect from the computer 107 and use the maps that are stored in the memory 104.

A drawback of transferring a large amount of map information to the electric apparatus 100 is that the capacity of the memory 104 of the electric apparatus 100 has to be very great. Instead, the electric apparatus may use a Radio frequency (RF) interface 108 in form of e.g. a standard GSM/UMTS communications interface to interact with a remote server 109. The remote server 109 acts as a central map storage, containing a large amount of electronic maps with different resolutions. When the electric apparatus 100 is communicating with the remote server 109, the electric apparatus 100 sends information retrieved by means of the positioning unit 101 concerning its current position to the server 109.

The server 109 may be updated with the position of the electric apparatus 100 continuously or when the control unit 102 determines that the current position and the last sent position differs by an specific amount. The update may also be initiated by the user of the electric apparatus 100. The server 109 then replies to the electric apparatus 100 by sending a map that corresponds to the current location. The resolution of the transferred map may depend upon e.g. the current velocity of the electric apparatus 100, a specific resolution requested by the user, the size of the display 103 on the electric apparatus 100, or the available bandwidth of the communication link between the server 109 and the electric apparatus 100.

The memory 104 will hence comprise one or more requested electronic maps and acts as a local storage of the maps that have been downloaded from a CD/DVD or from the server 109. When the user wants to view a map, the control unit 102 reads the whole or a part of the map from the memory 104 and presents it on the display 103. If the downloaded map covers a great area due to e.g. that the map concerns a remote area without many details, the control unit 102 may display only a part of the map (i.e. zooming in and out on the map).

When the electric apparatus 100 is moving, for example when being carried by the user, the map is moved over the display 103 opposite to the direction of the movement of the electric apparatus 100 by an amount corresponding to the velocity of the electric apparatus 100. This kind of update of the map on the display 103 is well known from the prior art, where the map is linearly moved over the display 103 with the center point of the display 103 corresponding to the position of the electric apparatus 100.

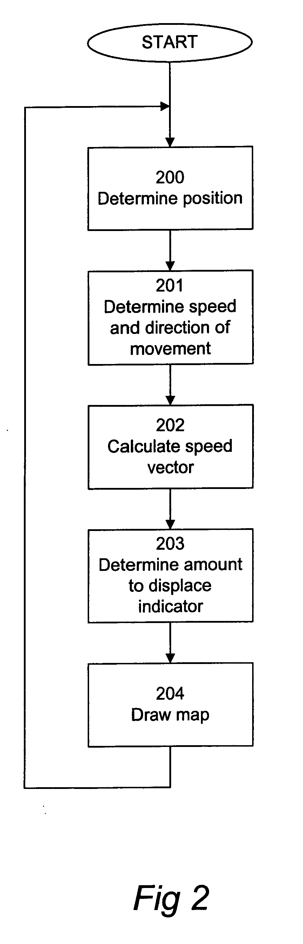

However, according to the present invention, the movement of the map on the display 103 is controlled by two separate mechanisms. The first mechanism, described above, is needed in order to update the display 103 as the user moves. The other mechanism will be described below with reference made to FIG 2.

FIG 2 is a schematic flow diagram of a method according to the invention to increase the readability of a map on a display 103. In step 200, the positioning unit 101 starts the procedure by determining the current position of the electric apparatus 100. As described above, this is preferably done by using GPS technology or any other suitable positioning technology. The position information retrieved in step 200 is used by the control unit 102 to determine which map to use in case the electric apparatus 100 stores more than one map in the memory 104, or to inform the server 109 which map to transfer in case the electric apparatus 100 is continuously updated by means of e.g. radio.

In step 201, the control unit 102 is provided with information from the positioning unit 101 regarding the current velocity of the electric apparatus 100. It is appreciated that the velocity information is a vector quantity, i.e. it comprises information regarding both the speed of the electric apparatus 100 as well as its direction of movement. As mentioned above, the velocity information is in a preferred embodiment determined by means using the Doppler shift in the carrier signals coming from each satellite in a GPS system.

The control unit 102 then uses the information regarding the speed and the direction of movement to calculate a speed vector 402 in step 202. When calculating the speed vector 402, the control unit 102 takes into account the size of the display 103 as well as the current zoom level, since these factors affects how much the map on the display 103 shall be displaced in addition to the first linear movement which will be described in more detail below. It is understood that the same factors may affect the first linear movement, but this is well known from the prior art and will not be discussed in more detail.

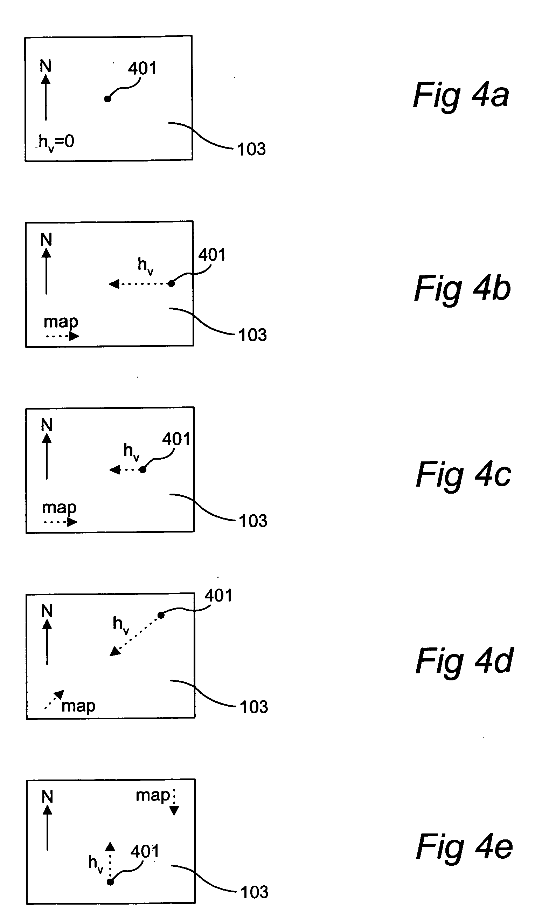

The control unit 102 then uses the speed vector 402 in step 203 to determine how much it shall displace the map on the display 103 in addition to the first linear movement. As described in the prior art section, the normal way to present the current position of the electric apparatus 100 on the display 103 is to draw an indicator (labeled 401 in FIG 4) in the center of the map on the display 103. This indicator 401 is not moved when the electric apparatus 100 is moved, instead the map is moved on the display 103 while keeping the indicator 401 locked to the center of the display 103. According to the invention, the control unit 102 displaces the map in an direction opposite to the direction of movement of the electric apparatus 100 by an amount corresponding to the speed of the movement.

In step 204, the control unit 102 then draws the map on the screen 103, including the indicator 401 showing the current position of the electric apparatus 100, with the indicator 401 no longer located in the center of the display 103 but displaced towards the edge of the display 103 as seen in figures 4a-d. By doing so, the user of the electric apparatus 100 will se more of the map corresponding to the area in front of him compared to what can be seen in the prior art. The procedure then returns to step 200 and starts over again.

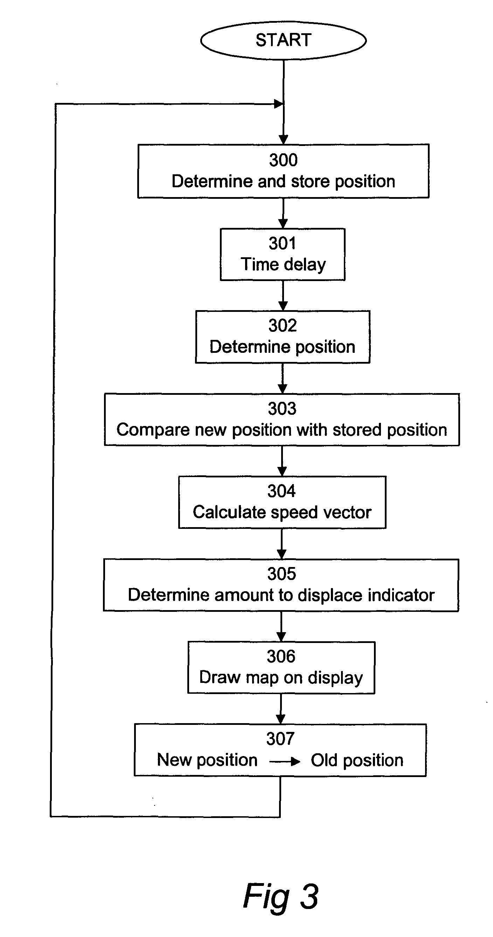

Figure 3 shows an alternative method of calculating the speed vector 402 of the electric apparatus 100. The procedure starts in step 300 when the control unit 102 receives and stores information from the positioning unit 101 regarding the current position of the electric apparatus 100.

In step 301, the control unit 102 initiates a time delay which may be predetermined delay or a dynamically determined delay. The function of the time delay is to make it possible for the control unit 102 to determine if the electric apparatus 100 has moved since the last reading.

After the time delay, the control unit 102 again, in step 302, receives information from the positioning unit 101 regarding the current position of the electric apparatus 100.

Due to the known time delay in step 301, the control unit 102 is in step 303 able to compare the new position reading from step 302 with the old reading from step 300 and determine both the speed and direction of movement of the electric apparatus 100. This reading may however be somewhat incorrect due to the disturbances described in the beginning of this section.

Steps 304-306 corresponds to steps 202-204 in FIG 2, wherein the control unit 102 calculates the speed vector 402, determines how much the map on the display 103 shall be displaced, and finally draws the map and indicator 401 on the screen 103.

Finally, in step 307 the control unit 102 replaces the old position in the memory 104 by the new position and returns to step 301.

As seen in FIG 4a, which illustrates a situation where the user is not moving, the indicator 401 is located in the center of the display 103. Normally when the user is at standstill, he wants to look at a map covering the vicinity of the location where he is standing. In this situation, the control unit 102 detects that the speed vector 402, labeled hᵥ in FIG 4, is zero and consequently does not displace the indicator on the display 103. The same applies if the user makes many quick turns. The speed vector 402 may be integrated over time to produce a slower reaction of the displacement of the indicator. The speed vector 402 is in a preferred embodiment made up from a scalar (i.e. the speed) and an angle (i.e. the direction of movement), but may as well be represented by rectangular coordinates.

FIG 4b illustrates a situation where the user is travelling westwards with a relatively high speed, the indicator is displaced so that the indicator 401 is placed in the right region near the right edge of the display 103. As the control unit 102 displaces the map, the user is able observe a large area on the map what is in front of him in his direction of travel.

FIG 4c illustrates basically the same situation as FIG 4b with the difference that the user is travelling westwards with a lower speed than in FIG 4b. As can be seen from figure 4c, the control unit 102 has calculated the speed vector 402 from the information provided by the positioning unit 101 and displaced the indicator on the display 103 by a smaller amount than in FIG 4b.

FIG 4d and 4e illustrates the corresponding situations as FIG 4b with the difference that the user travels in a direction towards the south-west and north respectively.

The invention has been described above with reference to a preferred embodiment. However, the present invention shall in no way be limited by the description above; the scope of the invention is best defined by the appended independent claims. Other embodiments than the particular one described above are equally possible within the scope of the invention.

## Claims

1. An electronic apparatus (100) comprising a display (103) and memory means (104) for storing map information, wherein the electronic apparatus is adapted to:
determine (200, 300, 302) the current position of the electronic apparatus,
determine (202, 304) a speed vector (402) corresponding to the direction and speed of a movement of the electronic apparatus,
display (204, 306) position information based on the determined current position of the electronic apparatus on a map on the display, wherein the current position of the electronic apparatus is indicated on the map,
**characterized in that**
the electronic apparatus (100) is further adapted to displace the position indication (401) of the electronic apparatus on the display (103) in a direction opposite to the speed vector (402) by an amount corresponding to the speed vector.

2. An apparatus (100) according to claim 1, wherein the current position, speed, and direction of movement is determined by means of GPS.

3. An apparatus (100) according to claim 1, wherein the current position, speed, and direction of movement is determined by means of triangulating a mobile station in a mobile communications system.

4. An apparatus (100) according to any of claims 1-3, wherein new map information is downloaded from a remote location (109) on request by the electric apparatus.

5. An apparatus (100) according to any of claims 1-4, wherein the value of speed vector (402) is integrated over time to create a mean value of the movement of the user.

6. Method of drawing a map on a display (103) on an electronic apparatus (100) capable of displaying position information comprising the steps of
determining (200, 300, 302) the current position of the electronic apparatus,
determining (202, 304) a speed vector (402) corresponding to the direction and speed of a movement of the electronic apparatus,
displaying (204, 306) position information based on the determined current position of the electronic apparatus on a map on the display, wherein the current position of the electronic apparatus is indicated (401) on the map, **characterized by**
displacing the position indication (401) of the electronic apparatus on the display (103) in a direction opposite to the speed vector (402) by an amount corresponding to the speed vector.

7. A method according to claim 6, wherein the current position, speed, and direction of movement is determined by means of GPS.

8. A method according to claim 6, wherein the current position, speed, and direction of movement is determined by means of triangulating a mobile station in a mobile communications system.

9. A method according to any of claims 6-8, wherein new map information is downloaded from a remote location (109) on request by the electric apparatus (100).

10. An apparatus according to any of claims 6-9, wherein the value of speed vector (402) is integrated over time to create a mean value of the movement of the user.
